# EUROPÄISCHE PATENTSCHRIFT

(11) **EP 2 125 416 B1**
(45) Veröffentlichungstag und Bekanntmachung des Hinweises auf die Patenterteilung: **15.02.2012**
(21) Anmeldenummer: 07819468.5
(22) Anmeldetag: 31.10.2007
(51) Int. Cl.: F17C 1/00, B60K 15/03, B60K 15/063, B60K 15/07, B60K 15/073

(54) **PERSONENKRAFTWAGEN**
PASSENGER AUTOMOBILE
VÉHICULE PARTICULIER

(30) Priorität: 29.11.2006 DE 102006056222
(43) Veröffentlichungstag der Anmeldung: 02.12.2009
(73) Patentinhaber: Daimler AG, 70327 Stuttgart (DE)
(72) Erfinder: HOEFNER, Benedikt, 70193 Stuttgart (DE)
(74) Vertreter: JENSEN & SON
(86) Internationale Anmeldenummer: PCT/EP2007/009434
(87) Internationale Veröffentlichungsnummer: WO 2008/064757

(56) Entgegenhaltungen:
- EP-A- 0 067 651
- WO-A-2006/057765
- US-A- 4 550 923
- US-A- 5 370 418
- US-A1- 2005 161 934

## Beschreibung

Die Erfindung betrifft einen Personenkraftwagen nach dem Oberbegriff des Anspruchs 1.

Um bei Personenkraftwagen eine größere Menge an Kraftstoff mitführen zu können und somit die Reichweite des Fahrzeugs zu erhöhen, ist es bekannt so genannte Drucktanks zu verwenden. Diese Drucktanks werden so konstruiert, dass sie durch Drücke von bis zu 700 bar eine möglichst große Menge Kraftstoff, insbesondere Wasserstoff, beinhalten können. Zur Erreichung dieser Drücke weisen die bekannten Drucktanks einen zylinderförmigen Querschnitt auf.

Aus der DE 101 63 029 A1 ist ein Brennstoffzellenfahrzeug mit einem zylinderförmigen Hochdruckwasserstofftank bekannt, bei dem der Tank am oberen Abschnitt des Hinterrads des Fahrzeugheckteils quer angeordnet ist.

Ebenso zeigt die JP 2002370550 A1 ein Fahrzeug, bei dem mehrere identische Hochdruckwasserstofftanks in der Nähe der Hinterachse quer angeordnet sind. Diese Hochdruckwasserstofftanks haben ebenfalls einen zylinderförmigen Querschnitt.

Die JP 2005212729 A1 offenbart eine Anordnung von zwei zylinderförmigen Hochdruckwasserstofftanks quer in der Nähe der Hinterachse. Hierbei weist zur Ausnutzung des Bauraums der eine Tank einen kleineren Durchmesser als der andere auf.

Aus der DE 10 2005 003 669 A1, der JP 2005212513 A1 und der US 2005/0224265 A1 sind sowohl Anordnungen der zylinderförmigen Hochdruckwasserstofftanks in Fahrzeugquerrichtung als auch in Fahrzeuglängsrichtung bekannt. Hierbei schlägt die JP 2005212513 A1 vor, den zylinderförmigen Tank im Mitteltunnel anzuordnen.

In den Schriften WO 2006/029415 A2, JP 2004026117 A1 und DE 102 97 132 T5 wird vorgeschlagen, mehrere zylinderförmige Hochdruckwasserstofftanks entlang der Fahrzeuglängsachse anzuordnen. Um den zur Verfügung stehenden Bauraum möglichst gut auszunutzen, werden die zylinderförmigen Tanks entweder in der Fahrzeugmitte oder an der Seite des Fahrzeugs angeordnet oder die Durchmesser der zylinderförmigen Tanks unterscheiden sich.

Aus der US 2005/161934 A1 ist ein Drucktank nach dem Oberbegriff des Anspruchs 1 mit mehreren zylindrischen Segmenten bekannt, wobei sich die Segmente in ihrem zylindrischen Durchmesser unterscheiden. Übergänge zwischen den zylindrischen Segmenten weisen dabei Kreissegmente mit unterschiedlichen Radien auf.

Aufgabe der Erfindung ist es, einen Personenkraftwagen mit einem Drucktank vorzuschlagen, bei dem eine größere Menge Kraftstoff mitgeführt werden kann.

Die Aufgabe wird durch einen Personenkraftwagen mit den Merkmalen des Anspruchs 1 gelöst. Demgemäß weist der Drucktank einen linear abnehmenden Radius zwischen seinen Endteilen auf.

Durch den konischen Teil ergibt sich eine höhere Gestaltungsfreiheit bei der Auslegung und Anordnung des Drucktanks. Hierdurch kann vorteilhaft ein zur Verfügung stehender Bauraum mit variierendem Querschnitt möglichst gut ausgenutzt werden, ohne dass es eines oder mehreren weiteren zylinderförmigen Drucktanks mit entsprechendem Durchmesser bedarf.

Durch die konische Form und auch die halbkugelförmigen Endteile des Drucktanks ist es möglich, diesen auf hohe Drücke auszulegen und somit eine größere Menge Kraftstoff an Bord des Personenkraftwagens zu speichern.

Bei einem vorteilhaften Fahrzeugkonzept ist der Drucktank in Fahrzeugquerrichtung mittig, insbesondere innerhalb eines Mitteltunnels und/oder zwischen zwei Fahrzeugsitzen, angeordnet.

Bei einem Personenkraftwagen mit einer Brennstoffzelle oder einem Verbrennungsmotor, der mit Wasserstoff betrieben wird, ist der Drucktank vorteilhaft als Hochdruckwasserstofftank ausgeführt.

Weitere Vorteile ergeben sich aus der folgenden Zeichnungsbeschreibung. In der Zeichnung sind ein Ausführungsbeispiel der Erfindung sowie eine von den geltenden Ansprüchen nicht erfasste Ausführungsform dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein erstes Ausführungsbeispiel eines erfindungsgemäßen Personenkraftwagens, wobei der Drucktank einen linear abnehmenden Radius zwischen seinen Endteilen aufweist,
- Fig. 2: das Ausführungsbeispiel gemäß Figur 1 in einer Draufsicht,
- Fig. 3: eine Ausführungsform, welche nicht von den geltenden Ansprüchen erfasst wird, wobei der Drucktank zwischen seinen Endteilen einen Teil mit linear abnehmendem Radius und zwei Teile mit verschiedenen konstanten Radien aufweist,
- Fig. 4: die Ausführungsform gemäß Figur 3 in einer Draufsicht, und
- Fig. 5: die Ausführungsform gemäß Figur 3 in einer Seitenansicht.

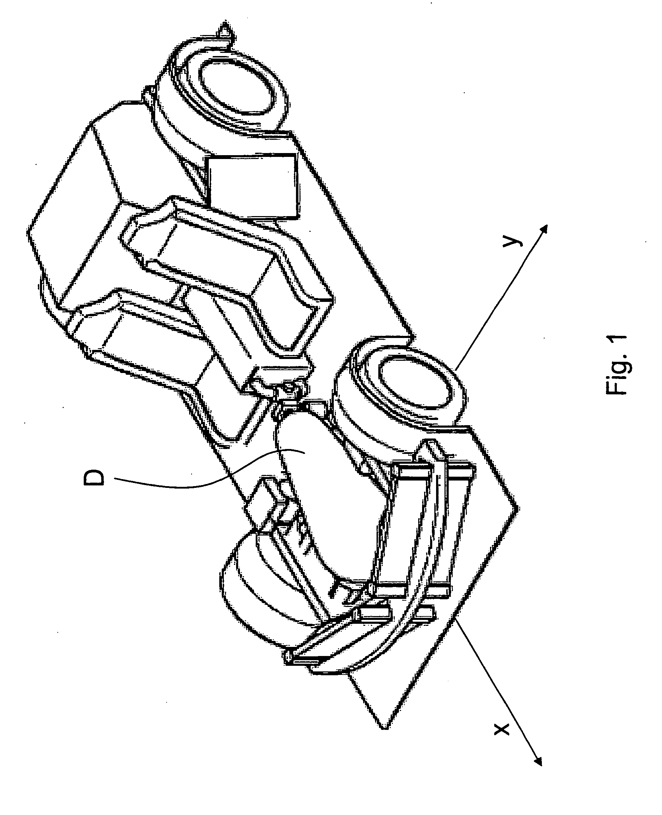

Figur 1 zeigt einen Personenkraftwagen mit einem Drucktank D, der entlang der Fahrzeuglängsachse x über der Vorderachse des Personenkraftwagens angeordnet ist. Bezüglich der Fahrzeugquerrichtung y ist der Drucktank D mittig angeordnet.

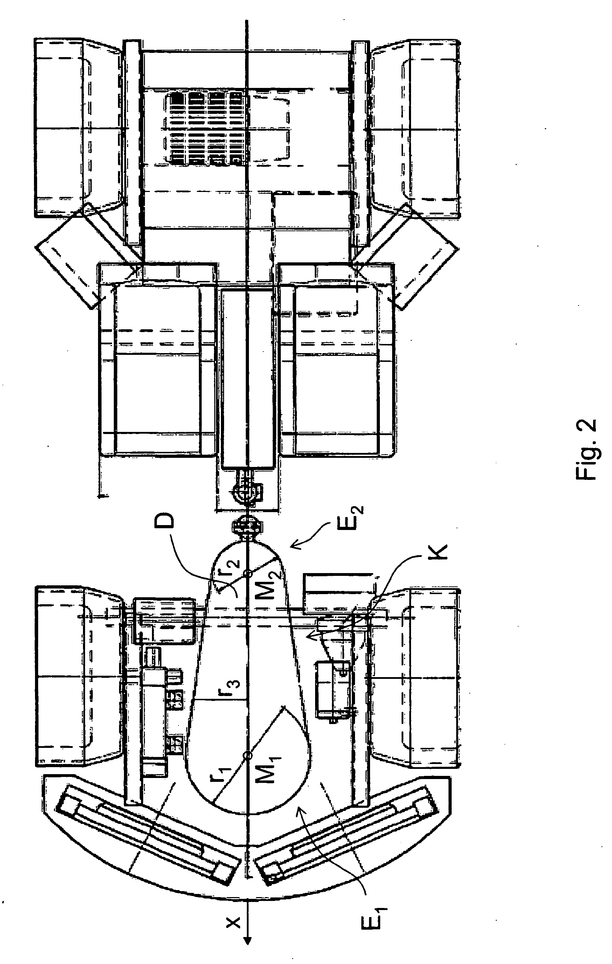

Der Drucktank D weist, wie dies insbesondere aus Figur 2 deutlich wird, ein erstes Endteil E₁, ein zweites Endteil E₂ und dazwischen einen konischen Teil K mit linear abnehmendem Radius r₃ auf. Die Endteile E₁ und E₂ sind halbkugelförmig mit den Radien r₁ und r₂ und den Mittelpunkten M₁ und M₂.

Hierbei umfasst konisch beziehungsweise linear abnehmend im Sinne der Erfindung auch fertigungsbedingte Abweichungen, die zu einer konkaven oder konvexen Form führen. Dies gilt insbesondere für die Übergänge von den Endteilen E₁ und E₂ zum konischen Teil K.

Bei der Auslegung des konischen Teils K des Drucktanks D und somit dem Verlauf des Radius r₃ des konischen Teils K ist die Stabilität des Drucktanks D bezüglich der gewünschten Drücke zu berücksichtigen.

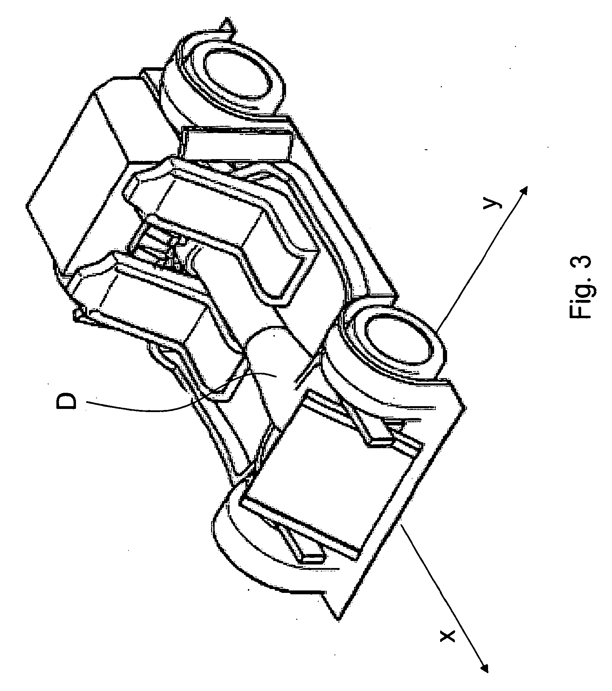

Figur 3 zeigt eine Ausführungsform, welche nicht von den geltenden Ansprüchen erfasst wird. In Figur 3 ist ein Personenkraftwagen mit einem Drucktank D dargestellt, wobei der Drucktank D entlang der Fahrzeuglängsachse x angeordnet ist und sich nahezu von der Vorderachse bis zur Hinterachse erstreckt. Die Anordnung des Drucktanks D bezüglich der Fahrzeugquerrichtung y ist mittig zwischen zwei Fahrzeugsitzen.

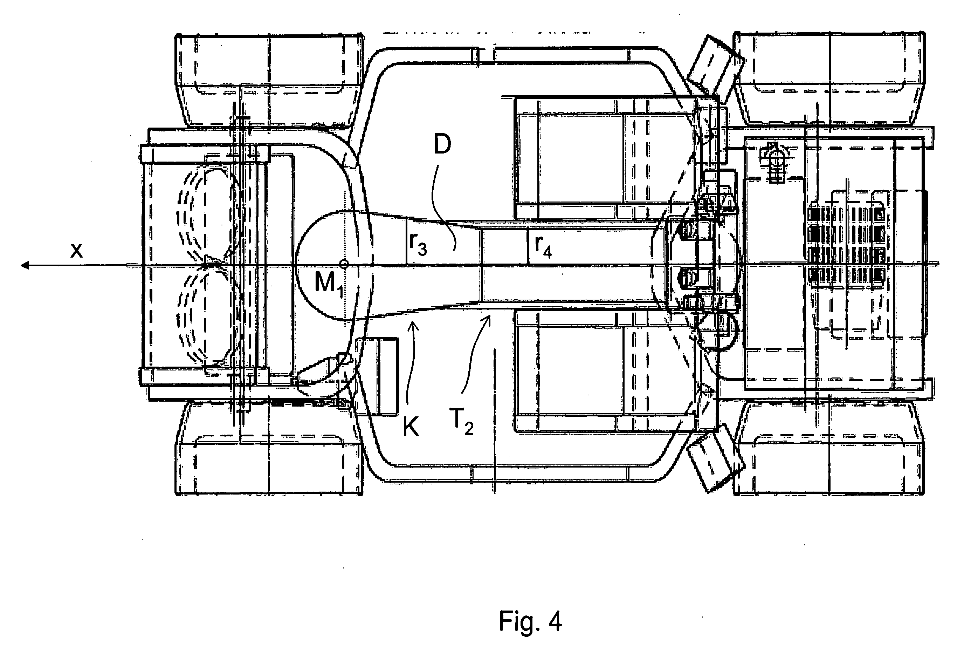

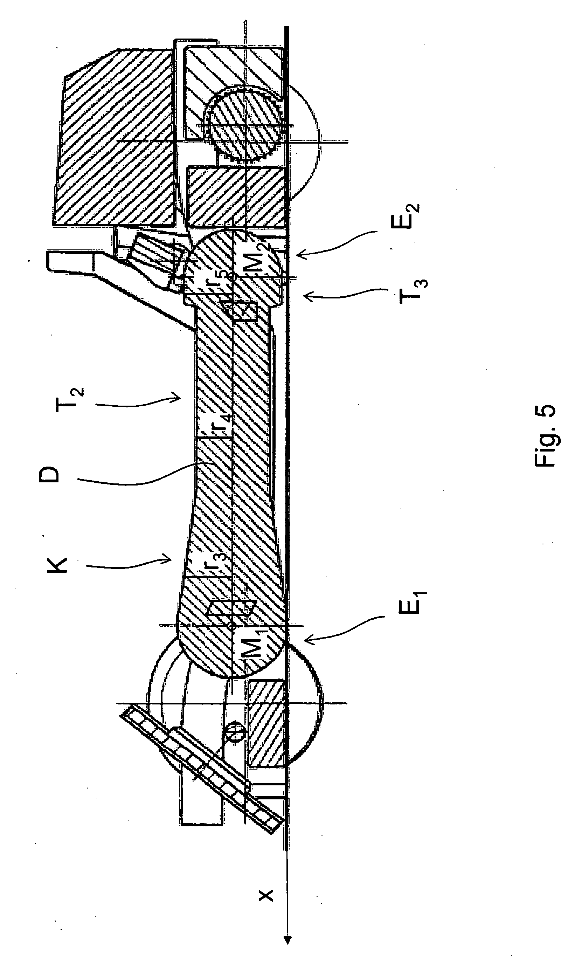

Die Figuren 4 und 5 zeigen die nicht von den geltenden Ansprüchen erfasste Ausführungsform der Figur 3 in einer Drauf- bzw. einer Seitenansicht. Wie insbesondere aus Figur 4 und 5 deutlich wird, weist der Drucktank D gemäß der Ausführungsform nach Figur 3 ebenfalls zwei halbkugelförmige Endteile E₁ und E₂ mit den Mittelpunkten M₁ und M₂ auf. Ausgehend vom Endteil E₁ schließt sich ein erster konischer Teil K mit linear abnehmendem Radius r₃ an, gefolgt von einem zweiten Teil T₂ mit konstantem Radius r₄ und einem dritten Teil T₃ mit konstantem Radius r₅, wobei der Radius r₅ des dritten Teils T₃ größer ist als der Radius r₄ des zweiten Teils T₂. Das dann abschließende halbkugelförmige Endteil E₂ weist einen geringeren Radius als das Endteil E₁ auf.

Aufgrund des zur Verfügung stehenden Bauraums können die Teile K, T₂ und T₃ auch in anderer Reihenfolge angeordnet sein oder weitere Teile hinzukommen. Ebenfalls kann das Endteil E₂ einen größeren Radius als das Endteil E₁ aufweisen.

Bei Personenkraftwagen mit Frontmotor und Heckantrieb oder auch Heckmotor und Frontantrieb verläuft ein Triebstrang innerhalb eines Mitteltunnels. Weist ein Personenkraftwagen, beispielsweise mit einer Brennstoffzelle und Elektromotoren an der angetriebenen Achse oder den angetriebenen Rädern, keinen Triebstrang im Mitteltunnel auf, so kann vorteilhaft innerhalb des Mitteltunnels der Drucktank D, beispielsweise als Hochdruckwasserstofftank, angeordnet werden. Somit werden für den Drucktank D Änderungen an der Karosserie gering gehalten und der Drucktank D im Falle eines Unfalls zusätzlich geschützt.

## Patentansprüche

1. Personenkraftwagen mit einem Drucktank (D), der entlang der Fahrzeuglängsachse (x) angeordnet ist,
wobei der Drucktank (D) zumindest einen konischen Teil (K) aufweist,
**dadurch gekennzeichnet, dass**
der Drucktank (D) einen linear abnehmenden Radius (r₃) zwischen seinen Endteilen (E₁, E₂) aufweist.

2. Personenkraftwagen nach Anspruch 1,
**dadurch gekennzeichnet, dass**
Endteile (E₁, E₂) des Drucktanks (D) als Halbkugeln ausgebildet sind.

3. Personenkraftwagen nach Anspruch 1 oder 2,
**dadurch gekennzeichnet, dass**
der Drucktank (D) in Fahrzeugquerrichtung (y) mittig angeordnet ist.

4. Personenkraftwagen nach Anspruch 3,
**dadurch gekennzeichnet, dass**
der Drucktank (D) zwischen Fahrzeugsitzen angeordnet ist.

5. Personenkraftwagen nach Anspruch 3 oder 4,
**dadurch gekennzeichnet, dass**
der Drucktank (D) innerhalb eines Mitteltunnels angeordnet ist.

6. Personenkraftwagen nach einem der vorhergehenden Ansprüche,
**dadurch gekennzeichnet, dass**
der Drucktank (D) ein Wasserstofftank ist.

## Claims

1. Passenger car with a pressurised tank (D) arranged along the longitudinal axis (x) of the vehicle, the pressurised tank (D) having at least one conical part (K),
**characterised in that**
the pressurised tank (D) has a linearly decreasing radius (r₃) between its end parts (E₁, E₂).

2. Passenger car according to claim 1,
**characterised in that**
end parts (E₁, E₂) of the pressurised tank (D) are designed as hemispheres.

3. Passenger car according to claim 1 or 2,
**characterised in that**
the pressurised tank (D) is arranged centrally in the transverse direction (y) of the vehicle.

4. Passenger car according to claim 3,
**characterised in that**
the pressurised tank (D) is located between vehicle seats.

5. Passenger car according to claim 13 or 4,
**characterised in that**
the pressurised tank (D) is located within a central tunnel.

6. Passenger car according to any of the preceding claims,
**characterised in that**
the pressurised tank (D) is a hydrogen tank.

## Revendications

1. Véhicule particulier doté d'un réservoir pour fluides sous pression (D) qui est situé le long de l'axe longitudinal (x) du véhicule, le réservoir pour fluides sous pression (D) présentant au moins une partie conique (K), **caractérisé en ce que** le réservoir pour fluides sous pression (D) présente un rayon (r₃) décroissant linéairement entre ses parties d'extrémité (E₁, E₂).

2. Véhicule particulier selon la revendication 1, **caractérisé en ce que** les parties d'extrémité (E₁, E₂) du réservoir pour fluides sous pression (D) sont configurées comme des hémisphères.

3. Véhicule particulier selon la revendication 1 ou 2, **caractérisé en ce que** le réservoir pour fluides sous pression (D) est situé au milieu dans le sens transversal (y) du véhicule.

4. Véhicule particulier selon la revendication 3, **caractérisé en ce que** le réservoir pour fluides sous pression (D) est situé entre les sièges du véhicule.

5. Véhicule particulier selon la revendication 3 ou 4, **caractérisé en ce que** le réservoir pour fluides sous pression (D) est situé à l'intérieur d'un tunnel central.

6. Véhicule particulier selon l'une quelconque des revendications précédentes, **caractérisé en ce que** le réservoir pour fluides sous pression (D) est un réservoir d'hydrogène.
